## Europäisches Patentamt
## European Patent Office
## Office européen des brevets

(19)

(11) Veröffentlichungsnummer: **0 062 630**
**B1**

(12) **EUROPÄISCHE PATENTSCHRIFT**

(45) Veröffentlichungstag der Patentschrift:
23.01.85

(51) Int. Cl.⁴: **H 04 N 1/40**

(21) Anmeldenummer: **80901932.6**

(22) Anmeldetag: **18.10.80**

(86) Internationale Anmeldenummer:
**PCT/DE 80/00157**

(87) Internationale Veröffentlichungsnummer:
**WO 82/01452 (29.04.82** Gazette 82/11)

(54) **EINSTELLVORRICHTUNG FÜR TROPFENGESCHWINDIGKEIT AN TINTENSCHREIBWERKEN.**

(43) Veröffentlichungstag der Anmeldung:
**20.10.82 Patentblatt 82/42**

(45) Bekanntmachung des Hinweises auf die Patenterteilung:
**23.01.85 Patentblatt 85/4**

(84) Benannte Vertragsstaaten:
**DE FR GB NL**

(56) Entgegenhaltungen:
**US - A - 3 631 511**
**US - A - 3 946 399**
**US - A - 4 184 168**
**US - A - 4 222 060**
**US - A - 4 266 232**

(73) Patentinhaber: **DR.-ING. RUDOLF HELL GmbH,
Grenzstrasse 1-5, D-2300 Kiel 14 (DE)**

(72) Erfinder: **KARIUS, Helmut, Hannes-Pries-Strasse 21,
D-2314 Schönkirchen (DE)**

## Beschreibung

Die Erfindung bezieht sich auf die Faksimiletechnik, insbesondere auf eine Vorrichtung zum Einstellen der Tropfengeschwindigkeit an Tintenschreibwerken, die nach dem Unterdruckverfahren arbeiten.

Bei Tintenschreibwerken, wie sie in der »Siemens-Zeitschrift« 51. Jahrgang, Heft 4, April 1977, Seite 219 bis 221, im einzelnen beschrieben werden, werden aus einer Düse einzelne Tintentröpfchen auf einen Aufzeichnungsträger gespritzt. Die Einzeltröpfchen werden dabei durch Kontraktions- und Expansionsvorgänge, z. B. eines piezoelektrischen Bauelements im Rhythmus der Erregerfrequenz erzeugt und ergeben in ihrer Gesamtheit das aufzuzeichnende Bild. Infolge der periodischen Erregerimpulse entsteht in der die Schreibdüse versorgenden Flüssigkeitssäule zwischen Piezoelement und Tintenvorrat eine unerwünschte, gedämpfte Schwingung, deren Phasenlage am Piezoelement rückwirkende Einflüsse auf die Tröpfchengeschwindigkeit vor der Düse hat.

Diese Schwingung stört nicht, wenn sie bei geringer Pulsfolgefrequenz der Erregerschwingung zwischen zwei aufeinanderfolgenden Tröpfchen bereits abgeklungen ist.

Bei Anwendungen von Schreibsystemen mit hohen Tropfenfolgefrequenzen, wie z. B. den nach dem gleichen Prinzip arbeitenden schnellen Eindüsen-Schreibsystemen für moderne Faksimile-Geräte, entstehen Probleme dadurch, daß die Schwingung der Tintensäule noch nicht vollständig abgeklungen ist, wenn der nächste Erregerimpuls wirkt.

Durch Überlagerung der Erregerschwingung am Piezoelement und der Störschwingung der Tintensäule ergibt sich an der Düse ein von Amplitude und Phasenlage beider Schwingungen abhängiger Druck, der unterschiedlich ist vom Druck bei ungestörter Erregung und damit eine veränderte Tröpfchengeschwindigkeit zur Folge hat.

Weil aber jedes Tröpchen von der Düse des Systems bis zum Aufzeichnungsträger, der relativ zum System gleichförmig bewegt wird, eine endliche Weglänge zurückzulegen hat, erreichen Tröpfchen unterschiedlicher Geschwindigkeit den Aufzeichnungsträger nicht in gleichen zeitlichen Abständen. Die Beobachtung zeigt, daß es durch den beschriebenen Störeffekt sogar dazu kommen kann, daß sich einerseits auf dem Aufzeichnungsträger mehrere Tröpfchen in einem Punkte vereinigen oder andererseits größere Lücken zwischen einzelnen Tröpfchen entstehen, die eigentlich eine geschlossene Linie schreiben sollten. Die Beobachtung zeigt weiterhin, daß der erste Tropfen einer Pulsfolge gegen alle nachfolgenden Tropfen besonders stark von seiner Soll-Lage auf dem Aufzeichnungsträger abweicht.

Das ist auch aus den oben geschilderten Untersuchungsergebnissen verständlich, weil zu dem Zeitpunkt, zu dem der erste Tropfen aus der Düse austritt, die Störschwingung überhaupt noch nicht ausgebildet ist. Untersuchungen zeigen weiter, daß die Druck-Wechselbeziehungen nach einigen wenigen Tropfen in einen quasistationären Zustand übergehen, so daß nach etwa 3 bis 4 Tropfen kein Ortsfehler auf dem Aufzeichnungsträger mehr zu beobachten ist.

Der Erfindung liegt die Aufgabe zugrunde, den beschriebenen Störeffekt zu vermeiden, d. h. Ortsfehler zu kompensieren, die bei Faksimile-Aufzeichnungen durch Anlaufeffekte entstehen. Die Erfindung erreicht dies dadurch, daß die ersten n Spritzimpulse einer Folge von k Spritzimpulsen mit konstanter Pulsfolgefrequenz, die in der Aufzeichnung eine geschlossene Linie ergeben sollen, in ihrer Amplitude so eingestellt werden können, daß die Geschwindigkeit der n Einzeltröpfchen zwischen Spritzdüse und Aufzeichnungsträger konstant und gleich der Geschwindigkeit aller folgenden (k−n) Tröpfchen ist.

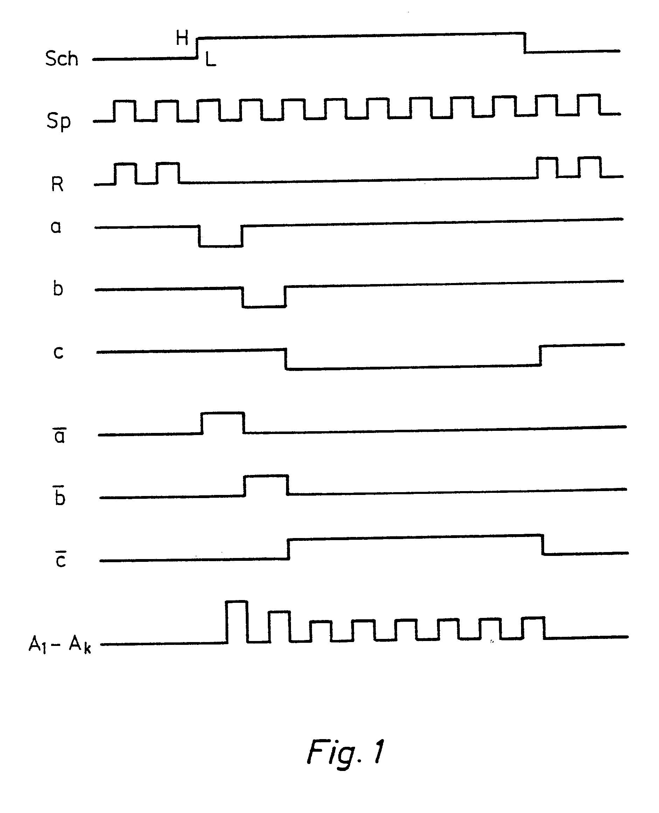

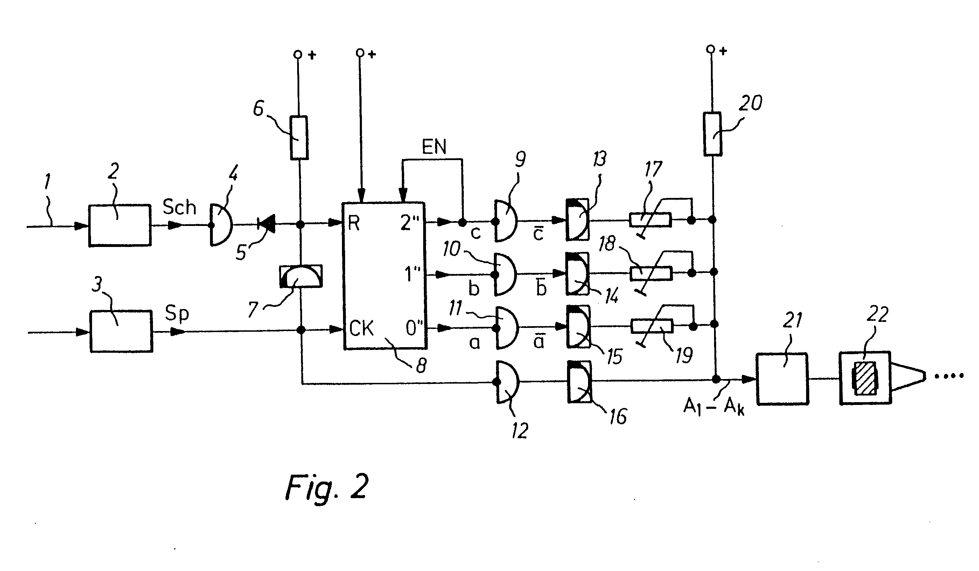

Die Erfindung wird im folgenden anhand der Fig. 1 und 2 näher erläutert. Es zeigt

Fig. 1 Impulsdiagramm,

Fig. 2 Schaltung zur Steuerung der Tröpfchengeschwindigkeit.

Das empfangene Faksimilesignal 1 wird zunächst in einem Demodulator 2 demoduliert. An seinem Ausgang steht dann der Schwarzimpuls Sch. Ein Generator 3 erzeugt ständig Spritzimpulse Sp mit konstanter Amplitude und Pulsfolgefrequenz. Soll ein Schwarzsignal geschrieben werden, dann wird normalerweise, d. h. ohne Anwendung der erfindungsgemäßen Schaltung für die Dauer des Schwarzimpulses Sch die Spritzfrequenz Sp auf den Eingang eines Treiberverstärkers 21 für das Tintenschreibwerk 22 gegeben.

In der erfindungsgemäßen Schaltung wirken nun die Spritzimpulse mit ihren positiven Flanken als Taktimpulse am Takteingang CK eines Zähler-Decodes 8 (z. B. RCA 4017).

Dieser erzeugt an seinen Ausgängen 0″; 1″ und 2″ Impulse a; b; c, die in den Invertern 9, 10, 11 (z. B. RCA 4069) zu den Impulsen ā; b̄ und c̄ invertiert werden. Die Pulsdauern von a und b bzw. von ā und b̄ entsprechen der Länge einer vollen Periode der Spritzfrequenz Sp. Die Pulsdauer von c, bzw. c̄, wird durch eine Verbindung des Ausgangs 2″ mit dem Eingang EN (enable) bis zum Zurücksetzen verlängert.

Durch diese Verknüpfung verharrt der Zähler bis zum Zurücksetzen im L-Zustand. Das Zurücksetzen des Zählers erfolgt etwas später als das Ende des Schwarzimpulses, nämlich durch den nächstfolgenden L−H-Übergang der Impulse am Eingang R. Die Impulse an R entstehen aus der Und-Verknüpfung von Schwarzimpuls Sch und Spritzimpuls Sp an der Zusammenschaltung von Tor 4, Tor 7 (beide z. B. RCA 4069), Diode 5 und Widerstand 6.

Die sequentielle Ansteuerung der Spritzimpulse am Eingang des Treiberverstärkers 21 ergibt sich nach Beginn eines Schwarzimpulses da-

durch, daß zunächst ā am Ausgang des Inverters 11 (z. B. RCA 4069) L-Pegel hat, wodurch auch der über den Treiber 15 (z. B. RCA-MM 74 C 906) auch der einstellbare Widerstand 19 mit seinem linken Ende auf L-Pegel, d. h. Null-Potential liegt. Das Spannungsteilerverhältnis Widerstand 20 zu Widerstand 19 ergibt die Amplitude des Pulses $A_1$ für die Zeitdauer, während der Impuls Sp auf L-Potential liegt. Dann nämlich liegt über einen Inverter 12 (z. B. RCA 4069) der Ausgang eines Treibers 16 (z. B. RCA MM 74 C 906) auf H-Potential. Die Pulsamplitude ist durch den veränderlichen Widerstand 19 einstellbar.

Die Amplitude des Pulses $A_2$ entsteht zeitlich nachfolgend in gleicher Weise durch entsprechendes Zusammenwirken von Inverter 10 (z. B. RCA 4069) mit Treiber 14 (z. B. RCA MM 74 C 906) und durch Einstellung des veränderlichen Widerstandes 18. Ebenso entsteht durch Zusammenwirken von Inverter 9 (z. B. RCA 4069) mit Treiber 13 (z. B. RCA MM 74 C 906) und durch Einstellung von Widerstand 17, die Amplitude der Impulse $A_3$ bis $A_k$. Die Einstellung des veränderlichen Widerstandes 17 bewirkt, daß alle Impulse $A_3$ bis $A_k$ gleiche Amplitude haben. Ein neuer Schwarzimpuls am Ausgang des Demodulators 2 bewirkt, daß sich die Vorgänge sinngemäß wiederholen.

## Gewerbliche Verwertbarkeit

Die Erfindung wird mit Vorteil an schnellen Tintenschreibern, die nach dem Unterdruckverfahren arbeiten, angewendet, insbesondere auf dem Gebiet schneller Faksimile-Aufzeichnungsgeräte.

## Patentansprüche

1. Verfahren zum Einstellen der Tröpfchengeschwindigkeit bei Tintenschreibwerken, dadurch gekennzeichnet, daß die ersten n Spritzimpulse einer Folge von k Spritzimpulsen mit konstanter Pulsfolgefrequenz, die in der Aufzeichnung eine geschlossene Linie ergeben sollen, in ihrer Amplitude so eingestellt werden können, daß die Geschwindigkeit der n Einzeltröpfchen zwischen Spritzdüse und Aufzeichnungsträger konstant und gleich der Geschwindigkeit aller folgenden (k—n) Tröpfchen ist.

2. Einrichtung zur Durchführung des Verfahrens nach Anspruch 1, dadurch gekennzeichnet, daß die Spritzimpulse (Sp) einer Folge mit konstanter Pulsfolgefrequenz einer Zählstufe (8) zugeführt werden, die die ersten n fehlerbehafteten Impulse abzählt und mittels eines nachgeschalteten Decoders an voreinstellbaren Potentiometern (17, 18, 19) über eine Torschaltung Werte für die Amplitude der ersten n Spritzimpulse vorgibt, die von der an sich konstanten Amplitude der übrigen Spritzimpulse abweichen können.

## Claims

1. Method of setting the droplet velocity in ink printer mechanisms, characterized in that the first n jet pulses of a sequence of k jet pulses having a constant pulse sequence frequency which are to yield a continuous line in the recording, may have their amplitude set in such manner that the speed of the n individual droplets is constant between the jet nozzle and the record carrier and equal to the speed of all the following droplets (k—n).

2. Device for application of the method according to claim 1, characterized in that the jet pulses (sp) of a sequence are having constant pulse sequence frequency fed to a counter stage (8) which counts off the first n pulses affected by error and by means of a postconnected decoder presets values for the amplitude of the first n jet pulses which may differ from the essentially constant amplitude of the remaining jet pulses, via a gate circuit by means of presettable potentiometers (17, 18, 19).

## Revendications

1. Procédé pour régler la vitesse des gouttelettes dans des mécanismes d'enregistrement à encre, procédé caractérisé en ce que les premières n impulsions de projection d'une succession de k impulsions de projection avec une fréquence de successions d'impulsions constante, qui doivent donner sur l'enregistrement une ligne fermée, peuvent être réglées en amplitude de sorte que la vitesse des n gouttelettes individuelles entre la buse de projection et le support d'enregistrement, est constante et égale à la vitesse de toutes les gouttelettes suivantes (k—n).

2. Dispositif pour la mise en oeuvre du procédé selon la revendication 1, caractérisé en ce que les impulsions de projection (sp) d'une succession avec une fréquence de successions d'impulsions constante, sont appliquées à un étage de comptage (8) qui compte les n premières impulsions défectueuses et qui, au moyen d'un décodeur branché à la suite, délivre par l'intermédiaire d'un circuit de porte sur des potentiomètres préréglables (17, 18, 19) des valeurs pour les amplitudes des n premières impulsions de projection, ces amplitudes pouvant s'écarter des amplitudes en soi constantes des autres impulsions de projection.

*Fig. 1*

Fig. 2

0 062 630